# FASCICULE DE BREVET EUROPEEN

(11) **EP 2 925 084 B1**
(45) Date de publication et mention de la délivrance du brevet: **22.08.2018**
(21) Numéro de dépôt: 15161111.8
(22) Date de dépôt: 26.03.2015
(51) Int. Cl.: H04W 88/16, H04W 52/02

(54) **Technique de gestion d'un etat d'activation d'un reseau d'acces radio dans un reseau local**
METHODE ZUR STEUERUNG EINES AKTIVIERUNGSZUSTANDS EINES NETZES FÜR DEN FUNKZUGANG IN EIN LOKALES NETZ
TECHNIQUE FOR MANAGING AN ACTIVATION STATE OF A WIRELESS ACCESS NETWORK IN A LOCAL NETWORK

(30) Priorité: 28.03.2014 FR 1452732
(43) Date de publication de la demande: 30.09.2015
(73) Titulaire: Orange, 75015 Paris (FR)
(72) Inventeur: Gosselin, Thomas, 92350 LE PLESSIS ROBINSON (FR); Del Missier, Cyril, 92250 LA GARENNE COLOMBES (FR)

(56) Documents cités:
- FR-A1- 2 951 897
- FR-A1- 2 968 156
- FR-A1- 2 992 517

## Description

L'invention se rapporte au domaine général des télécommunications.

L'invention concerne plus particulièrement une technique de gestion d'un état d'activation d'un réseau d'accès radio dans un réseau local, une passerelle permettant un accès à un réseau de communication étendu à des dispositifs du réseau local et communiquant avec au moins un des dispositifs du réseau local par l'intermédiaire du réseau d'accès radio.

La passerelle d'accès permet notamment à des dispositifs localisés dans un site client d'accéder à un réseau de communication étendu WAN (pour « Wide Area Network »), tel que le réseau Internet. Ces dispositifs sont également appelés CPE, pour « Customer Premise Equipment ». Pour un réseau local, il s'agit notamment de la passerelle d'accès, d'un décodeur TV « Set-Top-Box », d'un terminal mobile. Ces différents dispositifs s'échangent des données dans le réseau local par l'intermédiaire de canaux de communication radio, en utilisant notamment la technologie de transmission sans fil basée sur la norme de réseau radioélectrique IEEE 802.11 et ses évolutions communément regroupées sous l'appellation Wi-Fi (pour « Wireless Fidelity »).

Il est actuellement possible pour un dispositif du réseau local de piloter, de configurer ou encore de paramétrer la passerelle à partir d'une application s'exécutant sur le dispositif. A titre d'exemple illustratif, pour une LiveBox, il s'agit de l'application « ma LiveBox » s'exécutant sur un terminal mobile. Cette application permet par exemple de paramétrer la connexion Wi-Fi de la Livebox en définissant des plages d'horaire d'activation ; ceci permet d'éteindre automatiquement le Wi-Fi toutes les nuits par exemple. Il est également possible à partir de cette application de commander une extinction du Wi-Fi. L'utilisateur du terminal mobile peut ainsi agir sur la LiveBox à distance par l'intermédiaire du réseau de communication Wi-Fi.

Or, lorsque le Wi-Fi est éteint, l'utilisateur ne peut plus bénéficier de cette interface de commande à distance.

Le document FR2992517A1 propose de désactiver uniquement la partie émission du Wi-Fi et d'activer la partie émission sur réception d'un identifiant de réveil.

Un des buts de l'invention est de remédier à des insuffisances/inconvénients de l'état de la technique et/ou d'y apporter des améliorations.

Selon un premier aspect, l'invention a pour objet un procédé de gestion d'un état d'activation d'un réseau d'accès radio dans un réseau local. Une passerelle permet un accès à un réseau de communication étendu à des dispositifs du réseau local et communique avec au moins un des dispositifs du réseau local par l'intermédiaire du réseau d'accès radio, dit réseau principal. Le procédé comprend les étapes suivantes mises en oeuvre par la passerelle :
- association d'un dispositif du réseau local avec la passerelle sur un réseau d'accès radio secondaire, dit réseau de commande, distinct du réseau principal ;
- réception d'un message en provenance dudit dispositif sur le réseau de commande ;
- lorsque l'état d'activation du réseau principal est désactivé, activation du réseau principal ;
- établissement d'une connexion entre ledit dispositif et la passerelle sur le réseau principal.

Grâce à un message transmis par le dispositif vers la passerelle sur le réseau de commande, il est possible d'activer le réseau principal, afin de permettre au dispositif d'accéder au réseau de communication étendu. Le dispositif du réseau local et la passerelle d'accès sont chacun équipés d'un module d'accès radio secondaire, dit module de commande, en complément d'un module d'accès radio principal.

Dans un mode de réalisation particulier, le module d'accès radio principal est un module radio Wi-Fi et le module d'accès radio secondaire est un module d'accès radio basse consommation, tel que Bluetooth ®, Zigbee ® ou Z-Wave ®. Le module d'accès radio principal permet de former le réseau de communication principal, portant en partie ou totalement les échanges dans le réseau local. Le module d'accès radio secondaire permet de former le réseau de commande permettant aux dispositifs du réseau local de communiquer avec la passerelle d'accès, même lorsque le réseau principal est désactivé.

Le dispositif du réseau local dialogue directement au sein du réseau local avec la passerelle. Le message envoyé par le dispositif ne transite pas par des dispositifs intermédiaires localisés hors du réseau local. Lorsque ce dispositif du réseau local dispose d'un accès direct à un réseau mobile, par exemple de type 3G, il serait envisageable de transmettre le message au moyen du réseau mobile, puis de l'accès de la passerelle au réseau étendu. Toutefois, cette solution nécessite tout d'abord un accès direct au réseau mobile pour le dispositif du réseau local, puis que ce dernier se situe dans une zone de couverture où l'accès au réseau mobile est possible et pour finir que l'accès au réseau de communication étendu soit en état de fonctionnement. Une utilisation d'un réseau de commande au sein du réseau local permet ainsi de s'affranchir du bon fonctionnement d'équipements externes au réseau local. Un réseau de commande local permet également de limiter des coûts pour un accès à un réseau mobile pour les dispositifs du réseau local. La technique de gestion d'un état d'activation fonctionne notamment quelle que soit la couverture du réseau mobile par rapport à la couverture du réseau local. En outre, lorsque le réseau de commande est de type basse consommation, la mise en oeuvre du procédé nécessite peu d'énergie. L'association du dispositif avec la passerelle sur le réseau de commande peut être déclenchée automatiquement par le dispositif. Le mécanisme est ainsi transparent pour l'utilisateur du dispositif du réseau local.

La désactivation ou mise en veille du réseau principal peut avoir été commandée par le dispositif du réseau local ou bien du fait d'une mise en veille programmée sur la passerelle.

Les différents modes ou caractéristiques de réalisation mentionnés ci-après peuvent être ajoutés indépendamment ou en combinaison les uns avec les autres, aux étapes du procédé de gestion tel que défini précédemment.

Dans un mode de réalisation particulier, la passerelle commande l'association du dispositif avec la passerelle suite à un premier établissement de connexion du dispositif sur le réseau principal.

L'association du dispositif avec la passerelle sur le réseau de commande est commandée par la passerelle lors de la première association. Le mécanisme est ainsi transparent pour l'utilisateur du dispositif du réseau local.

Selon une caractéristique particulière, la commande d'association comprend en outre au moins une donnée nécessaire à l'association du dispositif avec la passerelle.

La passerelle transmet ainsi grâce à la connexion établie sur le réseau de communication principal une ou plusieurs données qui sont ensuite utilisées lors de l'association sur le réseau de commande. Aucune saisie n'est ainsi requise de la part de l'utilisateur du dispositif du réseau local.

Dans un mode de réalisation particulier, le message reçu est une commande d'activation du réseau principal.

Le dispositif du réseau local peut ainsi commander l'activation du réseau principal par l'intermédiaire du réseau de commande.

Selon une caractéristique particulière, la commande d'activation est transmise lorsqu'une exécution d'un service est prévue sur ledit dispositif, ladite exécution requérant un accès au réseau de communication étendu.

Le dispositif du réseau local peut ainsi activer à distance le réseau principal lorsqu'une exécution d'un service est prévue. A titre d'exemple illustratif, un enregistrement d'une émission TV est prévue sur le dispositif à partir de minuit et une mise en veille du Wi-Fi de la passerelle est effective toutes les nuits. Le dispositif peut alors commander au moyen du réseau de commande une mise en service du Wi-Fi de la passerelle.

Dans un mode de réalisation particulier, le message reçu est une demande d'association du dispositif avec la passerelle sur le réseau de commande.

Dès qu'un dispositif du réseau local s'associe sur le réseau de commande, la passerelle peut activer (remettre en service) son réseau de communication principal. Ceci permet de gérer en fonction des besoins des dispositifs du réseau local l'activation du réseau radio principal. A titre d'exemple illustratif, l'arrivée d'un terminal mobile dans le réseau local peut être détectée par la passerelle du fait de son association sur le réseau de commande et la passerelle remet en service le réseau Wi-Fi.

Dans un mode de réalisation particulier, une désactivation du réseau principal est déclenchée par la passerelle lorsqu'il n'y a plus de dispositif du réseau local associé sur le réseau de commande.

L'absence de dispositifs associés avec la passerelle sur le réseau de commande permet ainsi de détecter facilement que le réseau de communication principal peut être mis en veille. Ceci permet de diminuer la consommation énergétique et de limiter les émissions radio en l'absence de dispositifs.

Dans un mode de réalisation particulier, la passerelle transmet une commande de mise en service d'un module d'accès radio principal du dispositif sur le réseau de commande.

Ceci permet de gérer à distance une activation du module radio permettant au dispositif de communiquer sur le réseau principal. Indirectement, ceci permet également de désactiver le module radio du dispositif, puisque pour l'activer de nouveau, il n'est plus nécessaire d'agir manuellement sur le dispositif. La gestion du réseau principal est ainsi simplifiée pour l'utilisateur.

Selon un deuxième aspect, l'invention concerne également une passerelle d'accès permettant un accès à un réseau de communication étendu à des dispositifs du réseau local et communiquant avec au moins un des dispositifs du réseau local par l'intermédiaire du réseau d'accès radio, dit réseau principal. La passerelle comprend :
- un module d'accès radio principal, agencé pour communiquer sur le réseau principal ;
- un module d'accès radio secondaire, distinct du module d'accès radio principal, agencé pour communiquer avec un dispositif du réseau local sur le réseau de commande ;
- un module de gestion d'association, agencé pour associer la passerelle et un dispositif du réseau local sur un des réseaux principal ou de commande ;
- un module d'activation/désactivation du réseau principal, agencé pour modifier l'état d'activation du réseau principal de désactivé à activé sur réception d'un message en provenance d'un dispositif sur le réseau de commande.

Les avantages énoncés pour le procédé de gestion selon le premier aspect sont transposables directement à la passerelle d'accès.

Selon un troisième aspect, l'invention concerne également un système dans un réseau local, comprenant une passerelle d'accès selon le deuxième aspect et au moins un dispositif du réseau local, ledit dispositif comprenant :
- un module d'accès radio principal, agencé pour communiquer sur le réseau principal avec au moins la passerelle ;
- un module d'accès radio secondaire, distinct du module d'accès radio principal, agencé pour communiquer avec la passerelle sur le réseau de commande ;
- un module d'envoi d'un message à la passerelle sur le réseau de commande.

Les avantages énoncés pour le procédé de gestion selon le premier aspect sont transposables directement au système.

Selon un quatrième aspect, l'invention concerne un programme pour une passerelle d'accès, comprenant des instructions de code de programme destinées à commander l'exécution de celles des étapes du procédé de gestion précédemment décrit mises en oeuvre par la passerelle d'accès, lorsque ce programme est exécuté par cette passerelle et un support d'enregistrement lisible par une passerelle d'accès sur lequel est enregistré un programme pour une passerelle.

Les avantages énoncés pour le procédé de gestion selon le premier aspect sont transposables directement au programme pour une passerelle d'accès et au support d'enregistrement.

L'invention sera mieux comprise à l'aide de la description suivante de modes de réalisation particuliers de la technique de gestion, en référence aux dessins annexés sur lesquels :
- la figure 1 représente un réseau local dans lequel est mise en oeuvre la technique de gestion selon un mode particulier de réalisation ;
- les figures 2a-2e illustrent des étapes d'un procédé de gestion selon des modes particuliers de réalisation ;
- la figure 3 représente une passerelle d'accès selon un mode particulier de réalisation.

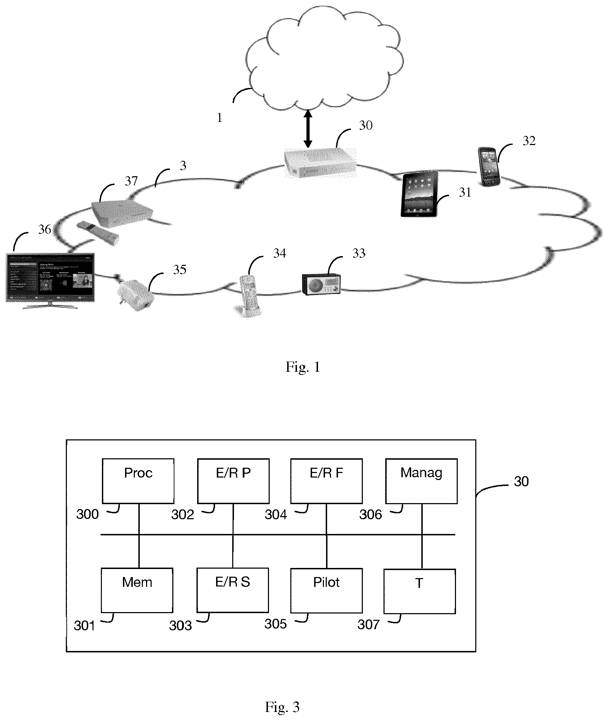

La figure 1 représente un réseau de communication privé ou local 3. Le protocole IP (pour « Internet Protocol ») est utilisé par les dispositifs dans le réseau local pour communiquer entre eux et également pour communiquer avec un réseau de communication étendu ou WAN (pour « Wide Area Network »), tel que le réseau Internet.

Pour l'environnement représenté à la figure 1, on entend par réseau de communication local 3 un réseau de type LAN (« Local Access Network »). Ce réseau peut être en particulier un réseau domestique ou un réseau d'entreprise. Une passerelle d'accès 30 est agencée pour fournir à des dispositifs du réseau local 3 un accès vers le réseau de communication étendu (par exemple Internet) par l'intermédiaire d'un réseau d'accès 1. La passerelle d'accès 30 assure l'acheminement des données entre le réseau d'accès 1 et le réseau local 3. Il s'agit par exemple d'une passerelle domestique ou bien d'une passerelle d'entreprise. Le réseau d'accès 1 est par exemple un réseau d'accès xDSL (pour « Digital Subscriber Line », le x indiquant qu'il peut s'agir d'un réseau ADSL, HSDL, VDSL, ...). Il peut également s'agir d'un réseau FTTH (pour « Fiber To The Home ») ou d'un réseau mobile tel qu'un réseau 3G ou 4G. Aucune limitation n'est attachée au type du réseau d'accès 1.

Les dispositifs 31-37 du réseau local 3 peuvent être n'importe quels dispositifs, par exemple domestiques, disposant d'une connexion réseau filaire ou sans fil. A titre d'exemples illustratifs, différents dispositifs sont représentés sur la figure 1. Il peut s'agir par exemple, d'un ordinateur, d'une tablette tactile 31, d'un terminal mobile 32, d'un poste de radio connecté 33, d'un téléphone fixe 34, d'un rétroprojecteur 35, d'une télévision 36, d'un décodeur TV 37 (« Set-Top Box »), d'une console de jeux, de dispositifs électroménagers, etc.

Le réseau local 3 est au moins en partie un réseau sans fil de type Wi-Fi, selon la norme IEEE 802.11 « Wireless LAN Medium Access Control (MAC) and Physical Layer (PHY) Spécifications » (802.11a/b/g/n/ac). La passerelle d'accès 30 communique ainsi avec certains des dispositifs du réseau local par l'intermédiaire d'une connexion sans fil, appelée par la suite connexion sans fil principale. Au moyen de cette connexion sans fil principale, les dispositifs du réseau local peuvent accéder au réseau de communication étendu (Internet) par l'intermédiaire de la passerelle d'accès et du réseau d'accès 1. Le débit de transfert des données sur cette connexion sans fil principale est supérieur à 11 Mbits/s et dépend de la version de 802.11 utilisée. Les échanges avec ces dispositifs du réseau local s'effectuent au niveau de la passerelle par l'intermédiaire d'un module d'accès radio principal 302. Il est ici souligné que la passerelle d'accès 30 peut communiquer également avec certains autres dispositifs du réseau local par l'intermédiaire d'une connexion réseau filaire.

La tablette 31 ou le terminal mobile peuvent exécuter une application «ma Livebox » leur permettant de piloter, de configurer ou encore de paramétrer la passerelle d'accès 30 au moyen d'une interface homme-machine. Cette application lui permet notamment d'activer ou de désactiver le réseau radio principal, c'est-à-dire d'éteindre ou de mettre en veille le module d'accès radio principal, de programmer une telle activation ou désactivation.

On se place par la suite dans le cas particulier où la tablette tactile 31, le terminal mobile 32 et le décodeur TV 37 disposent chacun d'un module d'accès radio de type Wi-Fi pour communiquer avec la passerelle d'accès 30. Le réseau de communication ainsi formé est appelé par la suite indifféremment réseau de communication principal ou réseau radio principal. La suite de la description se focalise plus précisément sur ces trois dispositifs. Il est souligné que ces dispositifs 31, 32, 37 sont identifiés ici afin d'illustrer la technique de gestion d'un état d'activation du réseau radio principal. Aucune limitation n'est attachée au nombre de ces dispositifs, ni aux types de ces dispositifs.

La passerelle d'accès 30 et les dispositifs 31, 32, 37 disposent également chacun d'un module d'accès radio secondaire. Ce module d'accès secondaire est appelé par la suite module de commande. La passerelle d'accès 30 et les dispositifs 31, 32, 37 échangent des données, notamment des commandes, dans ce réseau dit de commande. Les modules de commande sont de type radio basse consommation, adaptés pour des réseaux personnels sans fil, tels que Bluetooth ®, Zigbee ®, Z-Wave ®. Ce type de module de commande de faible puissance permet d'assurer une couverture radio dans une zone appelée WPAN (pour « Wireless Personal Area Network »).

Un réseau de commande Bluetooth ® s'appuie sur la spécification IEEE 802.15.1 "Wireless Medium Access Control (MAC) and Physical Layer (PHY) Spécifications for Wireless Personal Area Networks (WPANs)" et opère dans la bande de fréquences de 2.4 GHz.

Un réseau de commande Zigbee ® s'appuie sur la spécification IEEE 802.15.4 ("Low-Rate Wireless Personal Area Network (LR-WPAN) standard") et opère également dans la bande de fréquences de 2.4 GHz. Zigbee ® est notamment adapté pour rendre un service de contrôle à distance d'un dispositif.

Un réseau de commande Z-Wave ® s'appuie sur des produits certifiés par l'Alliance Z-Wave et opère dans la bande de fréquence de 868,42 MHz.

Il est ici souligné que les échanges sur le réseau de commande ne nécessitent pas un accès à un autre réseau, notamment externe. Ces échanges restent confinés dans le réseau de commande et ainsi dans le réseau local.

Le module de commande de la passerelle d'accès 30 est toujours en service, c'est-à-dire le réseau de commande est toujours actif.

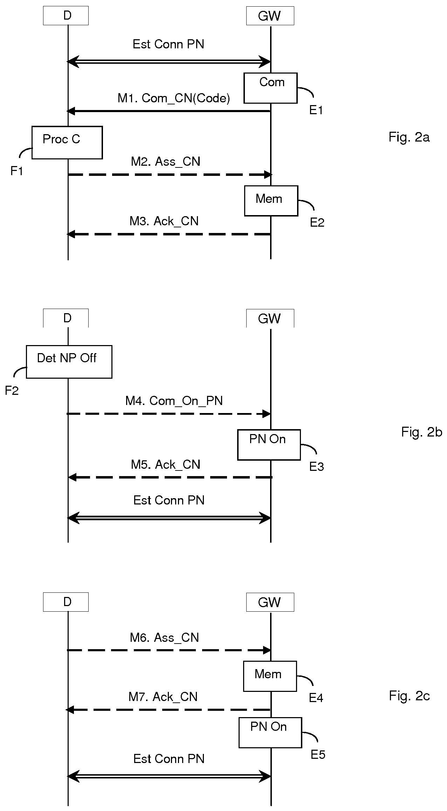

Nous allons maintenant décrire la technique de gestion d'un état d'activation du réseau radio principal dans des modes particuliers de réalisation, mise en oeuvre par la passerelle d'accès 30 et un des dispositifs 31, 32, 37 dans l'environnement de la figure 1 en relation avec les figures 2a-2e.

La figure 2a décrit plus précisément les échanges entre la passerelle d'accès et le dispositif du réseau local lors d'une première association du dispositif sur le réseau de communication principal. L'état d'activation du réseau radio principal est « activé ».

Les étapes de cette association sur le réseau principal sont représentées sur la figure la sous la forme d'une double flèche « Est Conn PN » et ne sont pas plus précisément détaillées. A l'issue de ces étapes, le dispositif 31, 32, 37 est associé avec la passerelle d'accès 30 sur le réseau radio principal et peut ainsi transmettre et recevoir des données en provenance d'autres dispositifs du réseau local 3 et de dispositifs connectés au réseau étendu. Une connexion est ainsi établie entre le dispositif du réseau local et la passerelle sur le réseau radio principal par l'intermédiaire du module d'accès radio principal.

Dans une étape E1, la passerelle d'accès 30 vérifie que le dispositif 31, 32, 37 associé sur le réseau principal n'est pas associé sur le réseau de commande et envoie une commande M1 au dispositif, afin que celui-ci s'associe avec la passerelle sur le réseau de commande. Lorsque le dispositif 31, 32, 37 n'a jamais été associé sur le réseau de commande, la commande M1 comprend en outre une ou plusieurs données nécessaires à l'association sur le réseau de commande. Dans un mode de réalisation, il s'agit d'un code PIN, par exemple de quatre chiffres, défini par la passerelle d'accès 30. Il est ici souligné que les échanges sur le réseau radio principal étant généralement protégés par chiffrement, cette ou ces données d'association sont transmises de manière sécurisée.

Dans une étape F1, le dispositif 31, 32, 37 transmet une demande d'association M2 sur le réseau de commande à destination de la passerelle. La demande d'association M2 comprend le cas échéant la ou les données nécessaires à l'association. Elle est transmise automatiquement par le dispositif sans intervention de l'utilisateur de ce dispositif. Cette association sur le réseau de commande est ainsi transparente pour l'utilisateur qui n'a pas de confirmation à saisir, ni de donnée nécessaire à l'association sur le réseau de commande.

Cette demande d'association M2 est reçue par la passerelle 30 dans une étape E2. Toujours dans cette étape E2, la passerelle 30 mémorise dans une table T que le dispositif 31, 32, 37 est associé sur le réseau de commande puis transmet un acquittement M3.

L'acquittement M3 est reçu par le dispositif 31, 32, 37, ce dernier étant alors associé avec la passerelle 30 sur le réseau de commande.

On se place par la suite dans le cas où le module d'accès radio principal de la passerelle d'accès est éteint ou mis en veille. L'état d'activation du réseau radio principal est « désactivé ». Ceci peut être le cas notamment suite à une action de l'utilisateur via l'application « ma Livebox » sur sa tablette 31 ou son terminal mobile 32 ou par une interface homme-machine de la passerelle d'accès.

Les figures 2b et 2c représentent des modes de réalisation particulier dans lesquels le module principal étant en veille, il est remis en service sur réception d'un message en provenance d'un des dispositifs par l'intermédiaire du réseau de commande. Ainsi, ces deux modes de réalisations particuliers comprennent :
- une association d'un dispositif du réseau local avec la passerelle sur le réseau de commande;
- réception d'un message en provenance du dispositif sur le réseau de commande ;
- lorsque l'état d'activation du réseau principal est désactivé, activation du réseau principal.

A l'issue de ces étapes, l'état d'activation du réseau radio principal est « activé ». Une connexion entre le dispositif et la passerelle peut alors être établie sur le réseau principal.

La figure 2b représente un mode de réalisation dans lequel le dispositif 31, 32, 37 détecte que le réseau radio principal doit être activé. Le dispositif 37 détecte par exemple qu'une exécution d'un service est prévue et que cette exécution requiert un accès au réseau de communication étendu. A titre d'exemple illustratif, un enregistrement d'une émission TV est prévue de minuit à deux heures du matin sur le dispositif 37. Si le réseau radio principal n'est pas activé, c'est-à-dire si le module radio principal de la passerelle 30 n'est pas remis en service, le dispositif 37 ne pourra pas recevoir le flux de données associé à cette émission TV. Dans un autre exemple, l'utilisateur du dispositif 31, 32 demande à l'application « ma Livebox » de remettre en service (ou d'activer) le réseau principal.

Dans une étape F2, le dispositif 31, 32, 37 détecte que le réseau de communication principal n'est pas activé et transmet une commande M4 d'activation du réseau radio principal. Cette commande M4 est transmise à la passerelle 30 sur le réseau de commande.

La commande M4 est reçue par la passerelle 30 dans une étape E3. Toujours dans cette étape E3, la passerelle 30 active le réseau radio principal en mettant en service le module d'accès radio principal et transmet un acquittement M5 au dispositif 31, 32, 37 ayant émis la commande d'activation.

Le dispositif 31, 32, 37 peut alors établir une connexion avec la passerelle 30 sur le réseau radio principal et accéder ainsi au réseau de communication étendu.

La figure 2c représente un mode de réalisation dans lequel la passerelle 30 détecte que le réseau de communication principal doit être activé. Plus précisément, dans ce mode de réalisation, le réseau radio principal doit être activé lorsque le dispositif 31, 32 s'associe sur le réseau de commande.

Le dispositif 31, 32 transmet une demande d'association M6 avec la passerelle 30 sur le réseau de commande. A titre d'exemple illustratif, le terminal mobile 32 rentre dans la zone de couverture du réseau de commande et une connexion au réseau de communication étendu par l'intermédiaire du réseau radio principal est préférable à une connexion par l'intermédiaire du réseau mobile. Cette association sur le réseau de commande est transparente pour l'utilisateur qui n'a pas de confirmation à saisir, ni de donnée nécessaire à l'association sur le réseau de commande.

Le cas échéant, la demande M6 comprend la ou les données nécessaires à l'association obtenues lors de la première association avec le réseau de commande.

Dans une étape E4, la passerelle 30 vérifie à partir de la table T que le dispositif 31, 32 est un dispositif du réseau local et envoie un acquittement M7 au dispositif 31, 32. Ce dernier est alors associé sur le réseau de commande.

Dans une étape E5, la passerelle 30 active le réseau radio principal en mettant en service le module d'accès radio principal. L'état d'activation du réseau radio principal est alors « activé ».

Le dispositif 31, 32 peut alors établir une connexion avec la passerelle 30 sur le réseau radio principal et accéder ainsi au réseau de communication étendu.

Ceci permet de simplifier pour l'utilisateur du réseau radio principal la reconnexion au réseau local, en mettant en service de manière automatique le réseau radio principal sur détection de l'association du dispositif avec le réseau de commande. L'utilisateur n'a pas besoin d'interagir manuellement avec la passerelle d'accès. Les étapes sont uniquement mises en oeuvre au niveau du réseau local, ne nécessitant pas d'interaction avec un réseau externe au réseau local. De plus, la mise en oeuvre de ces étapes du procédé est complètement transparente pour l'utilisateur. L'arrivée du dispositif de l'utilisateur dans la zone de couverture du réseau de commande déclenche en effet l'association au réseau de commande ainsi que l'activation du réseau radio principal par la remise en service du module d'accès radio principal. Une extinction ou mise en veille du module d'accès radio principal peut ainsi être mise en oeuvre de manière plus fréquente, du fait d'une remise en service plus simple.

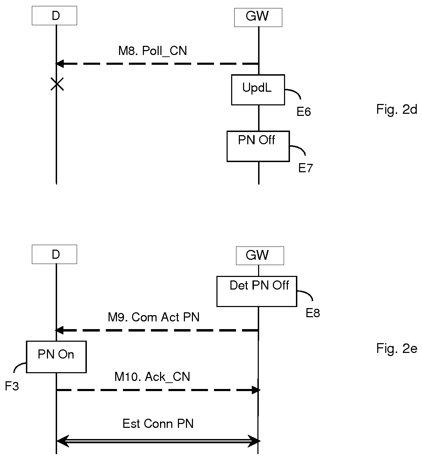

La figure 2d représente notamment un mode de réalisation dans lequel la passerelle 30 détecte que le réseau radio principal peut être mis hors service. Plus précisément, le réseau radio principal est désactivé lorsqu'il n'y a plus de dispositif du réseau local associé sur le réseau de commande. A l'issue de ces étapes, l'état d'activation du réseau radio principal est « désactivé ».

Dans une étape E6, la passerelle d'accès 30 détecte que le dispositif 31, 32, n'est plus présent sur le réseau de commande. Dans un mode de réalisation particulier, cette détection est consécutive à une absence de réponse du dispositif à un message M8 d'interrogation (« polling » en anglais). Des messages d'interrogation sont par exemple transmis de manière régulière par la passerelle aux dispositifs associés sur le réseau de commande. Sur réception d'un message d'interrogation, le dispositif interrogé répond à la passerelle. D'autres méthodes sont également envisageables. Le dispositif peut notamment transmettre de manière régulière un message indiquant sa présence à la passerelle. Lorsque le dispositif n'est plus associé sur le réseau de commande, la passerelle 30 met alors à jour la table T.

Dans une étape E7, la passerelle 30 détermine à partir de la table T qu'il n'y a plus de dispositif associé sur le réseau de commande et déclenche une désactivation du réseau radio principal en mettant en veille son module d'accès radio principal. L'état d'activation du réseau radio principal est alors « désactivé ».

Ceci permet de diminuer la consommation énergétique de la passerelle 30. Ce mode de réalisation est particulièrement avantageux lorsqu'il est combiné au mode de réalisation décrit en relation avec la figure 2c.

La figure 2e représente notamment un mode de réalisation dans lequel la passerelle 30 détecte que le réseau radio principal doit être activé, c'est-à-dire mis en service.

A titre d'exemple illustratif, la passerelle d'accès 30 a mis hors service le réseau principal suite à une commande de l'utilisateur. Ce dernier a par exemple demandé par l'intermédiaire de l'application « ma Livebox » une désactivation du réseau radio principal tous les jours entre minuit et huit heures du matin. Les modules d'accès radio principal correspondants des dispositifs du réseau principal ont également été mis hors service par la passerelle 30 avant de mettre hors service son propre module d'accès radio principal.

Dans une étape E8, la passerelle 30 détecte que le réseau radio principal doit être activé, c'est-à-dire remis en service, et transmet une commande M9 de mise en service du module d'accès radio principal au(x) dispositif(s) associé(s) sur le réseau de commande. La passerelle met également en service son propre module d'accès radio principal, le cas échéant.

Cette commande M9 est reçue par le dispositif 31, 32, 37 dans une étape F3. Toujours dans cette étape F3, le dispositif 31, 32, 37 transmet un acquittement M10 à la passerelle 30 et met en service son module d'accès radio principal.

Le dispositif 31, 32, 37 peut alors établir une connexion avec la passerelle 30 sur le réseau radio principal et accéder ainsi au réseau de communication étendu.

Ainsi, la passerelle d'accès peut piloter à distance les dispositifs du réseau local par l'intermédiaire du réseau de commande, notamment pour mettre en service les modules d'accès radio principal de ces dispositifs. Ceci permet notamment à la passerelle de mettre hors service les modules d'accès radio au réseau principal et de désactiver complètement le réseau radio principal. Dans les réseaux locaux connus de l'état de la technique, la passerelle peut toujours piloter une mise hors service par l'intermédiaire du réseau principal mais sans le réseau de commande, la passerelle ne peut pas ensuite les remettre en service à distance. Une action de l'utilisateur du dispositif ou bien d'un administrateur du réseau local serait alors nécessaire.

Pour résumer, un réseau de commande est prévu en complément du réseau radio principal. Le réseau de commande est en permanence activé, c'est-à-dire que la passerelle d'accès peut à tout moment recevoir des commandes d'association ou de gestion en provenance de dispositifs du réseau local. Le réseau radio principal peut être activé ou désactivé, les modules d'accès radio principal correspondants étant respectivement mis en service ou hors service. La passerelle 30 traite ces commandes de gestion reçues sur le réseau de commande comme si elles avaient été envoyées sur le réseau radio principal.

Lorsqu'un dispositif du réseau local détecte qu'il ne peut plus atteindre la passerelle d'accès au moyen du réseau radio principal, il communique au moyen du réseau de commande avec la passerelle d'accès pour transmettre des commandes de gestion, notamment pour l'activation du réseau radio principal.

Le mécanisme est totalement transparent pour l'utilisateur d'un dispositif qui interagit avec la passerelle d'accès au moyen d'une application « ma Livebox ». L'utilisateur a par ailleurs accès aux mêmes commandes ou informations que lorsqu'il est connecté au moyen du réseau radio principal.

Le réseau de commande permet également à la passerelle de piloter à distance les modules d'accès radio principal des dispositifs du réseau local.

La technique de gestion permet également de mettre en oeuvre une désactivation du réseau radio principal lorsqu'il n'y a plus de dispositifs associés sur le réseau de commande. La consommation énergétique est alors diminuée.

Nous allons maintenant décrire une passerelle d'accès 30 à un réseau de communication étendu dans un mode particulier de réalisation en référence à la figure 3. Une telle passerelle comprend notamment :
- une zone mémoire 301, agencée pour mémoriser un programme qui comprend des instructions de code pour mettre en oeuvre les étapes du procédé de gestion d'un état d'activation, tel que décrit en relation avec les figures 2a-2e ;
- une mémoire de stockage 307, agencée pour stocker des données utilisées lors de la mise en oeuvre du procédé de gestion d'un état d'activation, tel que décrit en relation avec les figures 2a-2e, notamment la table T :
- un processeur 300 pour exécuter des instructions de code de modules logiciels ;
- un module 302 d'accès radio principal, agencé pour communiquer sur le réseau principal avec au moins un des dispositifs du réseau local par l'intermédiaire du réseau d'accès radio, dit réseau principal ;
- un module 303 d'accès radio secondaire, distinct du module d'accès radio principal, agencé pour communiquer avec un dispositif du réseau local sur le réseau de commande ;
- un module d'interface 304 avec le réseau d'accès 1, agencé pour émettre et recevoir des données ;
- un module 305 d'activation/désactivation du réseau principal, agencé pour modifier l'état d'activation du réseau principal de « désactivé » à « activé » sur réception d'un message en provenance d'un dispositif sur le réseau de commande ;
- un module 306 de gestion d'association, agencé pour associer la passerelle et un dispositif du réseau local sur un des deux réseaux, principal ou de commande.

Il est ici souligné que la passerelle d'accès 30 comprend également d'autres modules de traitement, non représentés sur la figure 3, agencés pour mettre en oeuvre les différentes fonctions d'une passerelle d'accès.

Le module d'interface 304 est par exemple un module xDSL, FTTH, 3G, 4G.

Dans un mode de réalisation particulier, le module 306 de gestion d'association est agencé pour commander l'association du dispositif avec la passerelle suite à un premier établissement de connexion du dispositif sur le réseau principal.

Dans un mode de réalisation particulier, le module 305 d'activation/désactivation du réseau principal est agencé pour modifier l'état d'activation du réseau principal de « désactivé » à « activé » sur réception d'une commande d'activation du réseau principal.

Dans un mode de réalisation particulier, le module 305 d'activation/désactivation du réseau principal est agencé pour modifier l'état d'activation du réseau principal de « désactivé » à « activé » sur réception d'une demande d'association du dispositif avec la passerelle sur le réseau de commande.

Dans un mode de réalisation particulier, le module 306 de gestion d'association est en outre agencé pour détecter qu'il n'y a plus de dispositif du réseau local associé sur le réseau de commande et le module 305 d'activation/désactivation du réseau principal est alors agencé pour modifier l'état d'activation du réseau principal de « activé » à « désactivé ».

Dans un mode de réalisation particulier, le module 305 d'activation/désactivation du réseau principal est en outre agencé pour commander une mise en service d'un module d'accès radio principal du dispositif par l'intermédiaire du réseau de commande.

La technique de gestion est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 300, 305, 306 sont agencés pour mettre en oeuvre le procédé de gestion précédemment décrit. Il s'agit de préférence de modules logiciels comprenant des instructions logicielles pour faire exécuter celles des étapes du procédé de gestion précédemment décrit, mises en oeuvre par une passerelle d'accès. L'invention concerne donc aussi :
- un programme pour une passerelle d'accès, comprenant des instructions de code de programme destinées à commander l'exécution des étapes du procédé de gestion précédemment décrit, lorsque ledit programme est exécuté par cette passerelle d'accès ;
- un support d'enregistrement lisible par une passerelle d'accès sur lequel est enregistré le programme pour une passerelle.

Les modules logiciels peuvent être stockés dans ou transmis par un support de données. Celui-ci peut être un support matériel de stockage, par exemple un CD-ROM, un moyen d'enregistrement magnétique, par exemple une disquette magnétique ou un disque dur. D'autre part, le support de données peut être un support de transmission tel qu'un signal électrique, optique ou radio, qui peut être acheminé via un câble électrique ou optique, par radio ou par d'autres moyens. Les instructions de code de programme peuvent être en particulier téléchargées sur un réseau de type Internet.

Alternativement, le support de données peut être un circuit intégré dans lequel le programme est incorporé, le circuit étant adapté pour exécuter ou pour être utilisé dans l'exécution du procédé de gestion décrit précédemment.

L'invention concerne également un système dans un réseau local, comprenant une passerelle d'accès telle que décrite précédemment et au moins un dispositif du réseau local. Ce dispositif comprend :
- une zone mémoire, agencée pour mémoriser un programme qui comprend des instructions de code pour mettre en oeuvre les étapes du procédé de gestion d'un état d'activation mises en oeuvre par le dispositif ;
- une mémoire de stockage, agencée pour stocker des données utilisées lors de la mise en oeuvre du procédé de gestion d'un état d'activation :
- un processeur pour exécuter des instructions de code de modules logiciels ;
- un module d'accès radio principal, agencé pour communiquer sur le réseau principal avec au moins la passerelle ;
- un module d'accès radio secondaire, distinct du module d'accès radio principal, agencé pour communiquer avec la passerelle sur le réseau de commande ;
- un module d'envoi d'un message à la passerelle sur le réseau de commande.

Le module d'envoi est notamment agencé pour envoyer une demande d'association du dispositif avec la passerelle sur le réseau de commande.

Dans un mode de réalisation particulier, le module d'envoi est en outre agencé pour envoyer une commande d'activation du réseau principal. La commande d'activation est notamment transmise lorsqu'une exécution d'un service est prévue sur le dispositif, cette exécution requérant un accès au réseau de communication étendu.

## Revendications

1. Procédé de gestion d'un état d'activation d'un réseau d'accès radio dans un réseau local (3), une passerelle (30) permettant un accès à un réseau de communication étendu à des dispositifs (31-37) du réseau local et communiquant avec au moins un des dispositifs du réseau local par l'intermédiaire du réseau d'accès radio, dit réseau principal, **caractérisé en ce que** ledit procédé comprend les étapes suivantes mises en oeuvre par la passerelle :
- association (E2,E4) d'un dispositif du réseau local avec la passerelle sur un réseau d'accès radio secondaire, dit réseau de commande, distinct du réseau principal ;
- réception d'un message en provenance dudit dispositif sur le réseau de commande ;
- lorsque l'état d'activation du réseau principal est désactivé, activation (E3, E5) du réseau principal ;
- établissement d'une connexion entre ledit dispositif et la passerelle sur le réseau principal.

2. Procédé de gestion selon la revendication 1, dans lequel la passerelle commande l'association du dispositif avec la passerelle suite à un premier établissement de connexion du dispositif sur le réseau principal.

3. Procédé de gestion selon la revendication 2, dans lequel la commande d'association comprend en outre au moins une donnée nécessaire à l'association du dispositif avec la passerelle.

4. Procédé de gestion selon la revendication 1, dans lequel le message reçu est une commande d'activation du réseau principal.

5. Procédé de gestion selon la revendication 4, dans lequel la commande d'activation est transmise (F2) lorsqu'une exécution d'un service est prévue sur ledit dispositif, ladite exécution requérant un accès au réseau de communication étendu.

6. Procédé de gestion selon la revendication 1, dans lequel le message reçu est une demande d'association du dispositif avec la passerelle sur le réseau de commande.

7. Procédé de gestion selon la revendication 1, dans lequel une désactivation (E7) du réseau principal est déclenchée par la passerelle lorsqu'il n'y a plus de dispositif du réseau local associé sur le réseau de commande.

8. Procédé de gestion selon la revendication 1, dans lequel la passerelle transmet (E8) une commande de mise en service d'un module d'accès radio principal du dispositif sur le réseau de commande.

9. Passerelle d'accès (30) permettant un accès à un réseau de communication étendu à des dispositifs (31-37) du réseau local et communiquant avec au moins un des dispositifs du réseau local par l'intermédiaire du réseau d'accès radio, dit réseau principal, ladite passerelle comprenant :
- un module (302) d'accès radio principal, agencé pour communiquer sur le réseau principal ;
- un module (306) de gestion d'association, agencé pour associer la passerelle et un dispositif du réseau local sur un réseau principal ;
**caractérisé en ce que** la passerelle comprend en outre un module (303) d'accès radio secondaire, distinct du module d'accès radio principal, agencé pour communiquer avec un dispositif du réseau local sur le réseau de commande ;
le module de gestion d'association étant en outre agencé pour associer la passerelle et un dispositif du réseau local sur un réseau de commande ;
et un module (305) d'activation/désactivation du réseau principal, agencé pour modifier l'état d'activation du réseau principal de désactivé à activé sur réception d'un message en provenance d'un dispositif sur le réseau de commande.

10. Système dans un réseau local, comprenant une passerelle d'accès selon la revendication 9 et au moins un dispositif du réseau local, ledit dispositif comprenant :
- un module d'accès radio principal, agencé pour communiquer sur le réseau principal avec au moins la passerelle ;
- un module d'accès radio secondaire, distinct du module d'accès radio principal, agencé pour communiquer avec la passerelle sur le réseau de commande ;
- un module d'envoi d'un message à la passerelle sur le réseau de commande.

11. Programme pour une passerelle d'accès, comprenant des instructions de code de programme destinées à commander l'exécution de celles des étapes du procédé de gestion selon l'une des revendications 1 à 8 mises en oeuvre par la passerelle, lorsque ledit programme est exécuté par ladite passerelle.

12. Support d'enregistrement lisible par une passerelle d'accès sur lequel est enregistré le programme selon la revendication 11.

## Patentansprüche

1. Verfahren zur Verwaltung eines Aktivierungszustands eines Funkzugangsnetzes in einem lokalen Netz (3), wobei ein Gateway (30) Vorrichtungen (31-37) des lokalen Netzes einen Zugang zu einem Weitverkehrsnetz ermöglicht und mit wenigstens einer der Vorrichtungen des lokalen Netzes über das Funkzugangsnetz, Hauptnetz genannt, kommuniziert, **dadurch gekennzeichnet, dass** das Verfahren die folgenden Schritte umfasst, die von dem Gateway durchgeführt werden:
- Verknüpfung (E2, E4) einer Vorrichtung des lokalen Netzes mit dem Gateway über ein sekundäres Funkzugangsnetz, Steuerungsnetz genannt, das von dem Hauptnetz verschieden ist,
- Empfang einer Nachricht von der Vorrichtung über das Steuerungsnetz;
- wenn der Aktivierungszustand des Hauptnetzes "deaktiviert" ist, Aktivierung (E3, E5) des Hauptnetzes;
- Aufbau einer Verbindung zwischen der Vorrichtung und dem Gateway über das Hauptnetz.

2. Verfahren zur Verwaltung nach Anspruch 1, wobei das Gateway die Verknüpfung der Vorrichtung mit dem Gateway im Anschluss an einen ersten Verbindungsaufbau der Vorrichtung über das Hauptnetz steuert.

3. Verfahren zur Verwaltung nach Anspruch 2, wobei der Verknüpfungsbefehl außerdem wenigstens ein Datenelement umfasst, das für die Verknüpfung der Vorrichtung mit dem Gateway erforderlich ist.

4. Verfahren zur Verwaltung nach Anspruch 1, wobei die empfangene Nachricht ein Befehl zur Aktivierung des Hauptnetzes ist.

5. Verfahren zur Verwaltung nach Anspruch 4, wobei der Aktivierungsbefehl übertragen wird (F2), wenn eine Ausführung eines Dienstes auf der Vorrichtung vorgesehen ist, wobei diese Ausführung einen Zugang zu dem Weitverkehrsnetz erfordert.

6. Verfahren zur Verwaltung nach Anspruch 1, wobei die empfangene Nachricht eine Anforderung einer Verknüpfung der Vorrichtung mit dem Gateway über das Hauptnetz ist.

7. Verfahren zur Verwaltung nach Anspruch 1, wobei durch das Gateway eine Deaktivierung (E7) des Hauptnetzes ausgelöst wird, wenn keine Vorrichtung des lokalen Netzes mehr vorhanden ist, die über das Hauptnetz verknüpft ist.

8. Verfahren zur Verwaltung nach Anspruch 1, wobei das Gateway einen Befehl zur Inbetriebnahme eines Haupt-Funkzugangsmoduls der Vorrichtung über das Steuerungsnetz überträgt (E8).

9. Zugangsgateway (30), welches Vorrichtungen (31-37) des lokalen Netzes einen Zugang zu einem Weitverkehrsnetz ermöglicht und mit wenigstens einer der Vorrichtungen des lokalen Netzes über das Funkzugangsnetz, Hauptnetz genannt, kommuniziert, wobei das Gateway umfasst:
- ein Haupt-Funkzugangsmodul (302), das dafür ausgelegt ist, über das Hauptnetz zu kommunizieren;
- ein Verknüpfungsverwaltungs-Modul (306), das dafür ausgelegt ist, das Gateway und eine Vorrichtung des lokalen Netzes über ein Hauptnetz zu verknüpfen;
**dadurch gekennzeichnet, dass** das Gateway außerdem ein von dem Haupt-Funkzugangsmodul verschiedenes sekundäres Funkzugangsmodul (303) umfasst, das dafür ausgelegt ist, mit einer Vorrichtung des lokalen Netzes über das Steuerungsnetz zu kommunizieren;
wobei das Verknüpfungsverwaltungs-Modul außerdem dafür ausgelegt ist, das Gateway und eine Vorrichtung des lokalen Netzes über ein Steuerungsnetz zu verknüpfen;
und ein Modul (305) zur Aktivierung/Deaktivierung des Hauptnetzes, das dafür ausgelegt ist, den Aktivierungszustand des Hauptnetzes bei Empfang einer Nachricht von einer Vorrichtung über das Steuerungsnetz von "deaktiviert" zu "aktiviert" zu ändern.

10. System in einem lokalen Netz, welches ein Zugangsgateway nach Anspruch 9 und wenigstens eine Vorrichtung des lokalen Netzes umfasst, wobei die Vorrichtung umfasst:
- ein Haupt-Funkzugangsmodul, das dafür ausgelegt ist, über das Hauptnetz wenigstens mit dem Gateway zu kommunizieren;
- ein von dem Haupt-Funkzugangsmodul verschiedenes sekundäres Funkzugangsmodul, das dafür ausgelegt ist, mit dem Gateway über das Steuerungsnetz zu kommunizieren;
- ein Modul zum Senden einer Nachricht an das Gateway über das Steuerungsnetz.

11. Programm für ein Zugangsgateway, welches Programmcodeanweisungen umfasst, die dazu bestimmt sind, die Ausführung derjenigen der Schritte des Verfahrens zur Verwaltung nach einem der Ansprüche 1 bis 8 zu steuern, die von dem Gateway durchgeführt werden, wenn das Programm von dem Gateway ausgeführt wird.

12. Aufzeichnungsmedium, das von einem Zugangsgateway gelesen werden kann und auf dem das Programm nach Anspruch 11 aufgezeichnet ist.

## Claims

1. Method of management of a state of activation of a radio access network in a local area network (3), a gateway (30) allowing access to a wide area communication network to devices (31-37) of the local area network and communicating with at least one of the devices of the local area network by way of the radio access network, termed the main network, **characterized in that** said method comprises the following steps implemented by the gateway:
- association (E2,E4) of a device of the local area network with the gateway on a secondary radio access network, termed the command network, distinct from the main network;
- reception of a message originating from said device on the command network;
- when the state of activation of the main network is deactivated, activation (E3, E5) of the main network;
- establishment of a connection between said device and the gateway on the main network.

2. Method of management according to Claim 1, in which the gateway commands the association of the device with the gateway subsequent to a first establishment of connection of the device on the main network.

3. Method of management according to Claim 2, in which the association command furthermore comprises at least one item of data necessary for the association of the device with the gateway.

4. Method of management according to Claim 1, in which the message received is a main network activation command.

5. Method of management according to Claim 4, in which the activation command is transmitted (F2) when execution of a service is scheduled on said device, said execution requiring access to the wide area communication network.

6. Method of management according to Claim 1, in which the message received is a request for association of the device with the gateway on the command network.

7. Method of management according to Claim 1, in which a deactivation (E7) of the main network is triggered by the gateway when there is no longer any device of the local area network associated on the command network.

8. Method of management according to Claim 1, in which the gateway transmits (E8) a command for enabling a main radio access module of the device on the command network.

9. Access gateway (30) allowing access to a wide area communication network to devices (31-37) of the local area network and communicating with at least one of the devices of the local area network by way of the radio access network, termed the main network, said gateway comprising:
- a main radio access module (302), designed to communicate on the main network;
- an association management module (306), designed to associate the gateway and a device of the local area network on a main network;
**characterized in that** the gateway also comprises a secondary radio access module (303), distinct from the main radio access module, designed to communicate with a device of the local area network on the command network;
the association management module also being designed to associate the gateway and a device of the local area network on a command network;
and a module (305) for activation/deactivation of the main network, designed to modify the state of activation of the main network from deactivated to activated on receipt of a message originating from a device on the command network.

10. System in a local area network, comprising an access gateway according to Claim 9 and at least one device of the local area network, said device comprising:
- a main radio access module, designed to communicate on the main network with at least the gateway;
- a secondary radio access module, distinct from the main radio access module, designed to communicate with the gateway on the command network;
- a module for dispatching a message to the gateway on the command network.

11. Program for an access gateway, comprising program code instructions intended to command the execution of those of the steps of the management method according to one of Claims 1 to 8 that are implemented by the gateway, when said program is executed by said gateway.

12. Recording medium readable by an access gateway and on which the program according to Claim 11 is recorded.
